# EUROPEAN PATENT SPECIFICATION

(11) **EP 0 266 103 B1**
(45) Date of publication and mention of the grant of the patent: **18.05.1994**
(21) Application number: 87309183.9
(22) Date of filing: 16.10.1987
(51) Int. Cl.: G01N 27/82, G01R 33/12

(54) **Magnetic flux leakage probe for use in nondestructive testing**
Magnetischer Streuflussfühler zur zerstörungsfreien Prüfung
Sonde à dispersion de champ magnétique pour le contrôle non destructif

(30) Priority: 31.10.1986 US 927616
(43) Date of publication of application: 04.05.1988
(73) Proprietor: ELECTRIC POWER RESEARCH INSTITUTE, INC, Palo Alto California 94303 (US)
(72) Inventor: Bergander, Mark J., Madison Connecticut 06443 (US)
(74) Representative: Jackson, David Spence

(56) References cited:
- GB-A- 1 032 343
- US-A- 3 060 377
- US-A- 3 443 211
- US-A- 3 940 689
- US-A- 4 088 946
- PATENT ABSTRACTS OF JAPAN, vol. 6, no. 96 (P-120)[974], 4th June 1982; & JP-A-57 30 943

## Description

This invention relates to a magnetic flux detection probe for use in nondestructive testing of tubes and the like, and of the kind comprising magnetic means for establishing a magnetic flux pattern adjacent the probe, and a first coil and a second coil radially offset from each other relative to the axis of the probe for sensing magnetic flux during nondestructive testing, electrical conductor means being connected to the first coil and the second coil and extending from the probe for transmitting electrical signals from the first and second coils.

The use of magnetic flux leakage inspection of pipes and tubing is well known in the art of nondestructive testing. A magnetic field is established in the material undergoing inspection, and a sensor detects changes in flux patterns at the surface of the material due to cracks, pits, or wall thickness variations. Heretofore, eddy current coil detectors have been employed to detect sharp responses due to defects such as cracks and pits, while Hall effect sensors have been employed to detect more gradual responses due to wall thinning, for example.

In recent years, special ferritic alloys and carbon steel tubes have been employed in heat-exchanger tubing. These materials present a problem for in-service inspection due to their highly ferromagnetic properties. These properties severely limit the application of standard eddy current techniques which are widely used for non-magnetic tubing inspection. Presently, eddy current sensors with magnetic saturation are used on a limited basis for ferrous tube inspection. However, this method has several disadvantages including detecting false indications due to permeability variations, insensitivity to gradual types of tube defects, need for tube cooling during inspection, and complicated and expensive probes and instrumentation. Thus, there is a recognized, industry-wide need for a better method and apparatus for nondestructive ferrous tube inspection.

A magnetic flux detection probe of the kind defined hereinbefore at the beginning is described in US-A-3060377 (Schmidt et al). This known probe has three coils, one of which is a driving coil supplied with an alternating current, and serves as the magnetic means, while the other two coils form a detector assembly and are spaced away from the driver coil by a distance sufficient to substantially reduce the direct coupling between the driving coil and the detector coils. The detector coils are disposed adjacent to each other, have coil factors of different magnitudes, and are connected to each other in electrical opposition to provide a voltage signal equal to the vectorial difference between the signals produced in the two detector coils by current flow in the driver coil. Means are provided for measuring the phase difference between the alternating current supplied to the driver coil, and the voltage signal provided by the detector coils. The smaller detector coil acts as a reference for the average wall thickness of the tube under test, while the larger coil responds to small pits and flaws in addition to the average wall thickness.

GB-A-1032343 describes a method and apparatus for detecting flaws in wire ropes, in which differential winding of a detector coil is shown, the coil consisting of a single wire split into two parts, with a link to connect the two parts. Each half coil consists of pairs of semi-circular parts, each pair being connected by a short straight portion of wire disposed parallel to the wire rope under test.

US-A-4088946 (Charles et al) describes a magnetic bridge transducer formed with permanent magnets and a Hall effect sensor for identifying the presence and location of ferromagnetic discontinuities within or on a tubular specimen. Perturbations produced in a magnetic field, established by the permanent magnets, caused by ferromagnetic discontinuities associated with the specimen under test are sensed by the Hall effect sensor which is fixedly positioned with respect to the permanent magnets.

US-A-3443211 (Wood et al) describes a magnetometer inspection apparatus for ferromagnetic objects in which sensing and balancing magnetometers are mounted on magnetic means comprising a permanent magnet having a south pole piece, a north pole piece, and a connecting armature.

An object of the invention is an improved probe for use in nondestructive testing of ferritic stainless steel and carbon steel tubing.

Another object of the invention is a magnetic flux leakage probe which is responsive to both sharp and gradual magnetic flux changes due to material defects.

Still another object of the invention is a probe that is readily manufactured and used for nondestructive in-service inspection of pipe and tubing.

A feature of the invention is the use of a plurality of flux leakage coil sensors positioned in a probe for different spacing from a surface undergoing inspection.

Still another feature of the invention is the provision of a Hall-effect sensor along the flux leakage coil sensors to facilitate the detection of gradual changes due to wall thickness variations, for example.

According to the present invention, a magnetic flux detection probe of the kind defined hereinbefore at the beginning is characterized in that the magnetic means comprises first and second pole pieces, first and second magnets between the first and second pole pieces, and a magnetic connector between the first and second magnets, all axially aligned within a generally cylindrical housing having a central axis, and magnetic flux from the magnets leaving from the first pole piece and returning to the second pole piece through the wall of a tube or the like when the probe is positioned within the tube or the like for testing thereof; in that the first coil is positioned on and around the magnetic connector within the housing, and the second coil is positioned on a spacer and around the magnetic connector and radially offset within the housing from the first coil, the first and second coils in operation during nondestructive testing generating two separate signals for use in detecting the location and magnitude of defects by detecting magnetic leakage flux from a tube or the like, undergoing test, due to cracks and pits when present; and in that a Hall effect sensing device is positioned within the housing for sensing changes in magnetic flux patterns in a tube or the like undergoing test and thereby sensing variations in tube or the like wall thickness, electrical conductor means being connected to the Hall effect sensing device and extending from the probe for transmitting signals from the Hall effect sensing device.

Comparison of signals from the two coils facilitates identification of the damage point and the approximate severity of the damage.

The Hall-effect sensor is provided in the probe and spaced from the flux leakage sensing coils for detecting flux changes due to wall thickness variations. Thus, sharp response effects such as pits and cracks are readily discernible along with wall thinning defects.

In a preferred embodiment of the invention, the flux leakage coils are configured to respond to radial components of flux leakage at the inner surfaces of tubes and pipes. Thus each coil is designed to provide a response to the perpendicular or radial component of flux leakage produced around a defect.

The invention will now be described by way of example with reference to the accompanying drawings, in which:
Figure 1 is a perspective view of a probe in accordance with the invention shown in its operating environment.
Figure 2 is a sectional view of a probe in accordance with one embodiment of the invention.
Figure 3 is a sectional view of one turn of a coil in the probe in accordance with the preferred embodiment.
Figures 4A and 4B are a sectional view of a tube illustrating defects therein and a signal generated by the probe in accordance with the invention in response to the defects, respectively.
Figures 5A and 5B are a partial sectional view of a tube having defects and a signal generated by the probe in accordance with the invention in response to the defects, respectively.
Figure 6 is a plan view of magnetic source means for use in the probe in accordance with an alternative embodiment.

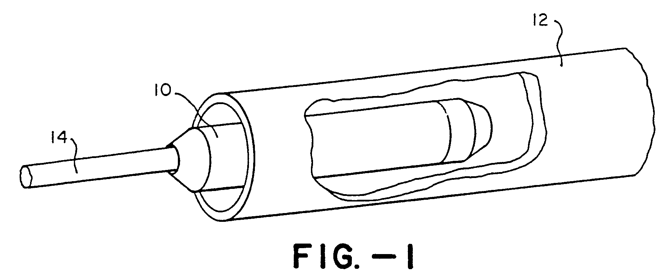

Figure 1 is a perspective view of a probe 10 in accordance with the invention positioned in its operating environment within a tube 12 which is shown partially in section to further illustrate the positioning of probe 10 therein. The probe 10 is pulled through the tube by means of a cord 14 in which electrical connections to the probe sensing elements are provided.

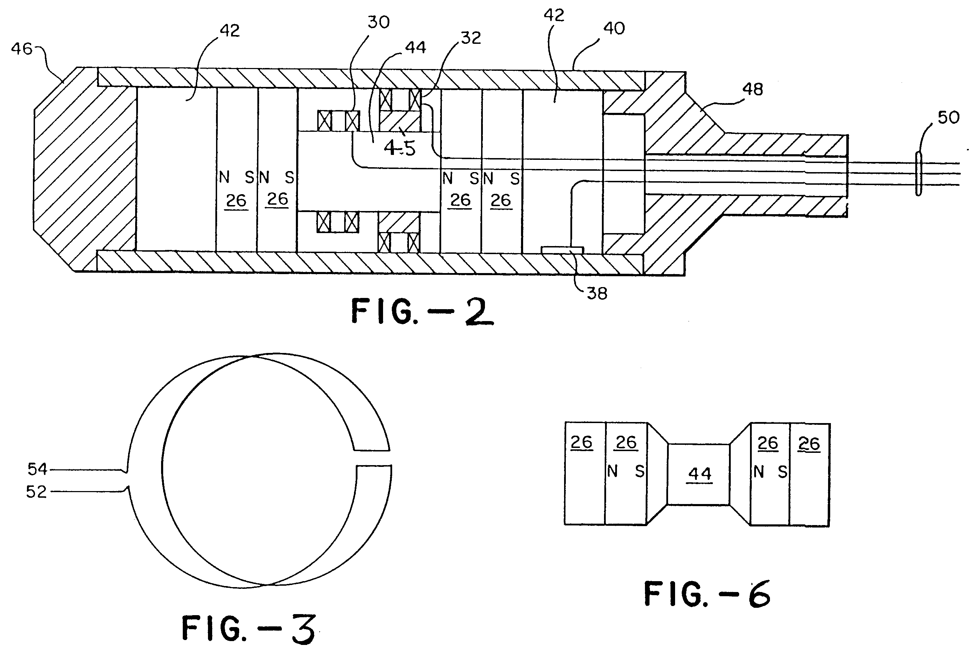

Figure 2 is a sectional view of a probe which is a preferred embodiment of the invention. The probe comprises a housing 40 in which are positioned four permanent magnets 26 and a magnetic connector 44 which, together with magnet pole pieces 42, provide an internal magnetic flux path within the probe. When the probe is positioned within a tube or pipe for inspection, the flux leaves one pole piece, travels through the wall of the pipe, and re-enters the probe at the other pole piece.

Mounted directly to the outer surface of connector 44 is the first coil 30, while the second coil 32 is mounted on the connector 44 by means of a spacer 45 whereby the two coils 30, 32 are radially displaced. The radial displacement of the two coils has proved to be advantageous in identifying both the location of defects and the magnitude of the defects.

The Hall-effect sensor 38 is mounted between one pole piece 42 and the housing 40 of the probe for sensing flux lines between the pole piece and the tube undergoing inspection. One end of the probe is sealed by a plug 46 while the other end of the probe receives a plug 48 having an internal opening through which the electrical connectors 50 to the Hall-effect device and coils pass. Cord 14 (not shown) extends outwardly from the plug 48.

The turns of the two coils 30 and 32 are configured to sense radially oriented flux. This is illustrated in one turn of a coil in the perspective view of Figure 3. Leads 52, 54 are interconnected to the turn, and it will be noted that the turn is annularly shaped for positioning on the connector 44 or the support 45 affixed to the cylindrical connector 44. The use of the two radially displaced coils has proved to be particularly advantageous in identifying the location and magnitude of defects such as pits and cracks.

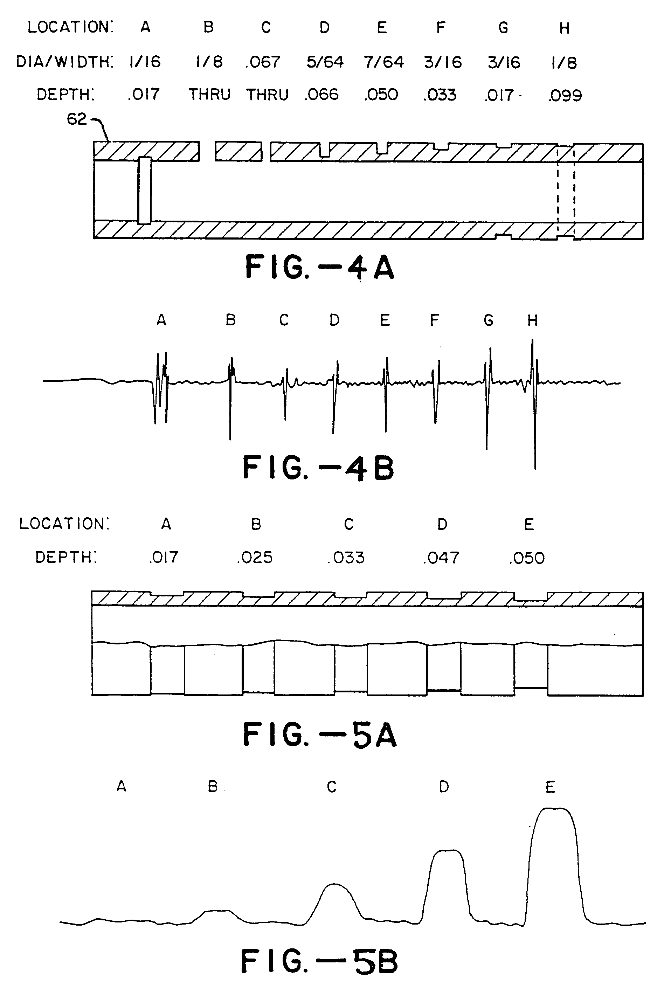

Figure 4A shows a section view of a length of test pipe 62 having defects A-H located therein. The diameter-to-width ratio of the defects, and the depths of the defects, are noted in Figure 4A. Figure 4B illustrates a strip chart print-out of the signal generated by one of the two radially offset coils as the test probe is passed through the test pipe in proximity to the defects.

Each coil provides a flux leakage signal response for the calibration tube having spikes positioned in time to correspond with the location of the defects and with the magnitudes of the signal spikes corresponding to the magnitudes of the defects, and each coil is separately connected with a channel of the electronic amplifier. A difference in amplitudes of the two signals arises from the radially offset positions of the coils and the response characteristic of each coil. By comparison of signal amplitudes from both channels, defect depth and point of origin can be determined.

Similarly, variations in thickness of the tube wall are detected by the Hall-effect device as illustrated in Figures 5A and 5B which show a section view of a pipe having wall thickness variations at locations A-E as shown in Figure 5A and the signal from the Hall-effect device shown in Figure 5B. It is noted that the Hall-effect device generates a signal whenever the thickness of the calibration pipe varies, and the magnitude of the signal is directly proportional to the magnitude of the change in thickness.

The embodiment of the probe illustrated in Figure 2 is particularly advantageous in inspecting pipes and tubing having relatively thin walls. For a thick-walled tube, the magnetic circuit illustrated in Figure 6 is preferred. Like elements in Figures 2 and 6 have the same reference numerals. The primary difference in the circuit is the bevelled or tapered end portions of the soft steel connector 44 to facilitate the transfer of flux between the magnets and the connector 44.

The magnetic flux leakage probe employing a plurality of radially offset flux leakage coils and a Hall-effect sensor has proved to be particularly useful in sensing defects in pipes and tubing of ferritic alloys and carbon steel material.

## Claims

1. A magnetic flux detection probe for use in nondestructive testing of tubes and the like, comprising magnetic means (26, 44) for establishing a magnetic flux pattern adjacent the probe, and a first coil (30) and a second coil (32) radially offset from each other relative to the axis of the probe for sensing magnetic flux during nondestructive testing, electrical conductor means (50) being connected to the first coil (30) and the second coil (32) and extending from the probe for transmitting electrical signals from the first and second coils (30, 32), characterized in that the magnetic means (26, 42, 44) comprises first and second pole pieces (42), first and second magnets (26) between the first and second pole pieces (42), and a magnetic connector (44) between the first and second magnets (26), all axially aligned within a generally cylindrical housing (40) having a central axis, and magnetic flux from the magnets (26) leaving from the first pole piece (42) and returning to the second pole piece (42) through the wall of a tube or the like when the probe is positioned within the tube or the like for testing thereof; in that the first coil (30) is positioned on and around the magnetic connector (44) within the housing (40), and the second coil (32) is positioned on a spacer (45) and around the magnetic connector (44) and radially offset within the housing (40) from the first coil (30), the first and second coils (30, 32) in operation during nondestructive testing generating two separate signals for use in detecting the location and magnitude of defects by detecting magnetic leakage flux from a tube (12) or the like, undergoing test, due to cracks and pits when present; and in that a Hall effect sensing device (38) is positioned within the housing (40) for sensing changes in magnetic flux patterns in a tube (12) or the like undergoing test and thereby sensing variations in tube or the like wall thickness, electrical conductor means (50) being connected to the Hall effect sensing device (38) and extending from the probe for transmitting signals from the Hall effect sensing device (38).

2. A probe according to claim 1, characterized in that each coil (30, 32) comprises a plurality of turns of wire (Figure 3) with each turn being so shaped and arranged as to sense a component of magnetic flux leakage perpendicular to the inner surface of a tube (12) undergoing test.

3. A probe according to claim 1, characterized in that the Hall effect sensing device (38) is mounted to one of the pole pieces (42) abutting the housing (40).

## Patentansprüche

1. Magnetfluß-Erfassungssonde zur Verwendung bei der zerstörungsfreien Prüfung von Rohren und dergleichen, mit einer magnetischen Einrichtung (26, 44) zum Erzeugen eines Magnetflußmusters angrenzend an die Sonde, und einer ersten (30) und einer zweiten Spule (32), die bezüglich der Achse der Sonde radial gegeneinander versetzt sind, zum Erfassen des Magnetflusses während der zerstörungsfreien Prüfung , mit einer elektrischen Leitungseinrichtung (50), die an die erste (30) und die zweite Spule (32) angeschlossen ist und zum Übertragen elektrischer Signale von der ersten und der zweiten Spule (30, 32) von der Sonde weg verläuft, dadurch **gekennzeichnet,** daß die magnetische Einrichtung (26, 42, 44) ein erstes und ein zweites Polstück (42), einen ersten und einen zweiten Magneten (26) zwischen dem ersten und zweiten Polstück (42) und eine magnetische Verbindung (44) zwischen dem ersten und zweiten Magneten (26) aufweist, die sämtlich innerhalb eines insgesamt zylindrischen, eine Mittelachse aufweisenden Gehäuses (40) axial fluchtend angeordnet sind, wobei der Magnetfluß von den Magneten (26) das erste Polstück (42) verläßt und durch die Wand eines Rohrs oder dergleichen zum zweiten Polstück (42) zurückkehrt, wenn die Sonde zur Prüfung innerhalb des Rohrs oder dergleichen angeordnet ist; daß die erste Spule (30) auf der magnetischen Verbindung (44) innerhalb des Gehäuses (40) angeordnet ist und diese umschließt und die zweite Spule (32) auf einem Abstandhalter (45) angeordnet ist, die magnetische Verbindung (44) umschließt und innerhalb des Gehäuses (40) von der ersten Spule (30) radial versetzt ist, wobei die erste und zweite Spule (30, 32) im Betrieb während der zerstörungsfreien Prüfung zwei getrennte Signale zur Verwendung bei der Erfassung des Ortes und der Größe von Fehlern durch Erfassen des von ggf. vorhandenen Rissen und Lunkern herrührenden magnetischen Streuflusses von einem zu prüfenden Rohr (12) oder dergleichen erzeugen; und daß eine Halleffekt-Erfassungseinrichtung (38) innerhalb des Gehäuses (40) zum Erfassen von Änderungen des Magnetflußmusters in einem zu prüfenden Rohr (12) oder dergleichen angeordnet ist, wodurch Änderungen der Wanddicke des Rohrs oder dergleichen erfaßt werden, wobei die elektrische Leitungseinrichtung (50) an die Halleffekt-Erfassungseinrichtung (38) angeschlossen ist und zur Übertragung von Signalen von der Halleffekt-Erfassungseinrichtung (38) von der Sonde weg verläuft.

2. Sonde nach Anspruch 1, dadurch gekennzeichnet, daß jede Spule (30, 32) mehrere Drahtwindungen (Figur 3) aufweist, wobei jede Windung so geformt und angeordnet ist, daß eine Komponente des Streu-Magnetflusses senkrecht zur inneren Oberfäche eines zu prüfenden Rohrs (12) erfaßt wird.

3. Sonde nach Anspruch 1, dadurch gekennzeichnet, daß die Halleffekt-Erfassungseinrichtung (38) an einem der Polstücke (42) befestigt ist und am Gehäuse (40) anliegt.

## Revendications

1. Sonde de détection à flux magnétique à utiliser dans le contrôle non destructif de tubes et analogues, comportant des moyens magnétiques (26, 44) destinés à établir un diagramme de flux magnétique à proximité immédiate de la sonde, et une première bobine (30) et une seconde bobine (32) décalées radialement l'une de l'autre par rapport à l'axe de la sonde pour capter un flux magnétique durant un contrôle non destructif, des moyens à conducteurs électriques (50) étant connectés à la première bobine (30) et la seconde bobine (32) et s'étendant depuis la sonde pour transmettre des signaux électriques à partir des première et seconde bobines (30, 32), caractérisée en ce que les moyens magnétiques (26, 42, 44) comprennent des première et seconde pièces polaires (42), des premier et second aimants (26) entre les première et seconde pièces polaires (42), et un connecteur magnétique (44) entre les premier et second aimants (26), tous alignés axialement à l'intérieur d'un boîtier globalement cylindrique (40) ayant un axe central, et un flux magnétique provenant des aimants (26) partant de la première pièce polaire (42) et revenant à la seconde pièce polaire (42) à travers la paroi d'un tube ou analogue lorsque la sonde est positionnée à l'intérieur du tube ou analogue pour le contrôle de celui-ci ; en ce que la première bobine (30) est positionnée sur le connecteur magnétique (44) et autour de celui-ci à l'intérieur du boitier (40), et la seconde bobine (32) est positionnée sur une entretoise (45) et autour du connecteur magnétique (44) et est décalée radialement à l'intérieur du boîtier (40) par rapport à la première bobine (30), les première et seconde bobines (30, 32), en fonctionnement durant un contrôle non destructif, générant deux signaux séparés à utiliser dans la détection de la position et de l'amplitude de défauts par détection d'un flux magnétique de dispersion provenant d'un tube (12) ou analogue, en cours de contrôle, du fait de la présence de fissures et de piqûres ; et en ce qu'un dispositif capteur (38) à effet Hall est positionné à l'intérieur du boîtier (40) pour capter des variations des diagrammes de flux magnétique dans un tube (12) ou analogue soumis à un contrôle et capter ainsi des variations de l'épaisseur de la paroi du tube ou analogue, les moyens à conducteurs électriques (50) étant connectés au dispositif capteur (38) à effet Hall et s'étendant depuis la sonde pour transmettre des signaux à partir du dispositif capteur (38) à effet Hall.

2. Sonde selon la revendication 1, caractérisée en ce que chaque bobine (30, 32) comprend plusieurs spires de fil (figure 3), chaque spire étant configurée et agencée de façon à capter une composante de dispersion de flux magnétique perpendiculaire à la surface intérieure d'un tube (12) subissant un contrôle.

3. Sonde selon la revendication 1, caractérisée en ce que le dispositif capteur (38) à effet Hall est monté sur l'une des pièces polaires (42) en butée contre le boîtier (40).
